(19)

**Europäisches Patentamt**
**European Patent Office**
**Office européen des brevets**

(11) **EP 4 765 997 A1**

(12) **EUROPEAN PATENT APPLICATION**
published in accordance with Art. 153(4) EPC

(43) Date of publication:
**24.06.2026 Bulletin 2026/26**

(21) Application number: **24853762.3**

(22) Date of filing: **13.08.2024**

(51) International Patent Classification (IPC):
***H04W 74/00*** (2009.01)

(52) Cooperative Patent Classification (CPC):
**H04W 74/00; H04W 74/0833**

(86) International application number:
**PCT/CN2024/111698**

(87) International publication number:
**WO 2025/036353 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.08.2023 CN 202311045390**

(71) Applicant: **Vivo Mobile Communication Co., Ltd.
Dongguan, Guangdong 523863 (CN)**

(72) Inventors:
• **SUN, Rongrong
Dongguan, Guangdong 523863 (CN)**
• **TAMRAKAR, Rakesh
Dongguan, Guangdong 523863 (CN)**
• **WANG, Chenxi
Dongguan, Guangdong 523863 (CN)**
• **SONG, Yang
Dongguan, Guangdong 523863 (CN)**

(74) Representative: **Murgitroyd & Company
165-169 Scotland Street
Glasgow G5 8PL (GB)**

(54) **RESOURCE CONFIGURATION DETERMINATION METHOD AND APPARATUS, AND USER EQUIPMENT AND STORAGE MEDIUM**

(57) This application relates to the field of communication technologies, and discloses a resource configuration determining method and apparatus, a user equipment, and a storage medium. The method includes: A user equipment UE receives physical downlink control channel PDCCH signaling. The PDCCH signaling is used to trigger a random access procedure. The UE determines, based on first information, a target random access channel RACH resource configuration corresponding to the random access procedure. The first information is associated with the PDCCH signaling. The target RACH resource configuration is at least one of at least two RACH resource configurations configured for the UE.

```
                                                              ┌─ 201
┌─────────────────────────────────────────────────────┐
│          A UE receives PDCCH signaling               │
└─────────────────────────────────────────────────────┘
                           │
                           ▼                              ┌─ 202
┌─────────────────────────────────────────────────────┐
│  The UE determines, based on first information, a     │
│  target RACH resource configuration corresponding    │
│  to a random access procedure                         │
└─────────────────────────────────────────────────────┘
```

FIG. 2

## Description

### CROSS-REFERENCE TO RELATED APPLICATION

This application claims priority of Chinese Patent Application No. 202311045390.X, filed on August 17, 2023, which is incorporated herein by reference in its entirety.

### TECHNICAL FIELD

This application relates to the field of communication technologies, and in particular, to a resource configuration determining method and apparatus, a user equipment, and a storage medium.

### BACKGROUND

For a layer 1 or layer 2 triggered mobility (L1/L2 triggered mobility, LTM) in R18, a random access channel (Random Access Channel, RACH) procedure of a candidate cell to be handed over needs to be triggered in advance through physical downlink control channel (Physical Downlink Control Channel, PDCCH) signaling, to implement uplink synchronization with the candidate cell in advance. For an inter-cell multiple transmission and reception point (inter-cell mTRP) supported in R18, an RACH procedure between a transmission and reception point (Transmission and Reception Point, TRP) of a local cell and a TRP of a neighboring cell needs to be triggered through the PDCCH signaling, to implement uplink synchronization of the two TRPs.

Since the RACH resource configuration of the local cell, an RACH resource configuration of the candidate cell, and the RACH resource configuration of the neighboring cell are separately configured, when a user equipment (User Equipment, UE) performs LTM, or performs inter-cell mTRP transmission, or performs both the LTM and the inter-cell mTRP transmission, the UE cannot determine a set of RACH resource configurations to which resource-related configuration information of a physical random access channel (Physical Random Access Channel, PRACH) transmission indicated by the PDCCH signaling is to be mapped.

### SUMMARY

Embodiments of this application provide a resource configuration determining method and apparatus, a user equipment, and a storage medium, to determine a set of RACH resource configurations to which resource-related configuration information of PRACH transmission indicated by PDCCH signaling is to be mapped.

According to a first aspect, a resource configuration determining method is provided. The method includes: A UE receives PDCCH signaling. The PDCCH signaling is used to trigger a random access procedure. The UE determines, based on first information, a target RACH resource configuration corresponding to the random access procedure. The first information is associated with the PDCCH signaling. The target RACH resource configuration is at least one of at least two RACH resource configurations configured for the UE.

According to a second aspect, a resource configuration determining apparatus is provided. The apparatus includes a receiving module and a determining module. The receiving module is configured to receive PDCCH signaling. The PDCCH signaling is used to trigger a random access procedure. The determining module is configured to determine a target RACH resource configuration based on first information. The first information is associated with the PDCCH signaling. The target RACH resource configuration is at least one of at least two RACH resource configurations configured for the UE.

According to a third aspect, a UE is provided. The terminal includes a processor and a memory. The memory stores a program or instructions executable on the processor. When the program or the instructions are executed by the processor, the steps of the method according to the first aspect are implemented.

According to a fourth aspect, a UE is provided, including a processor and a communication interface. The processor is configured to: receive PDCCH signaling, where the PDCCH signaling is used to trigger a random access procedure; and determine a target RACH resource configuration corresponding to the random access procedure based on first information, where the first information is associated with the PDCCH signaling, and the target RACH resource configuration is at least one of at least two RACH resource configurations configured for the UE.

According to a fifth aspect, a readable storage medium is provided. The readable storage medium stores a program or instructions. When the program or the instructions are executed by a processor, the steps of the method according to the first aspect are implemented.

According to a sixth aspect, a chip is provided. The chip includes a processor and a communication interface. The communication interface is coupled to the processor. The processor is configured to run a program or instructions to implement the method according to the first aspect.

According to a seventh aspect, a computer program/program product is provided. The computer program/program product is stored in a storage medium. The program/program product is executed by at least one processor, to implement the steps of the method according to the first aspect.

In embodiments of this application, a UE receives PDCCH signaling. The PDCCH signaling is used to trigger a random access procedure. The UE determines, based on first information, a target RACH resource configuration corresponding to the random access procedure. The first information is associated with the PDCCH signaling. The target RACH resource configuration is at least one of at least two RACH resource configurations configured for the UE. In this solution, after receiving the PDCCH signaling, the UE may determine, based on the first information associated with the PDCCH signaling, the target RACH resource configuration corresponding to the random access procedure from the at least two RACH resource configurations configured for the UE. Therefore, the UE may map, to the target RACH resource configuration, the resource-related configuration information of the PRACH transmission indicated by the PDCCH signaling.

## BRIEF DESCRIPTION OF THE DRAWINGS

FIG. 1 is a schematic architectural diagram of a wireless communication system according to an embodiment of this application;
FIG. 2 is a schematic flowchart I of a resource configuration determining method according to an embodiment of this application;
FIG. 3 is a schematic flowchart II of a resource configuration determining method according to an embodiment of this application;
FIG. 4 is a schematic flowchart III of a resource configuration determining method according to an embodiment of this application;
FIG. 5 is a schematic flowchart IV of a resource configuration determining method according to an embodiment of this application;
FIG. 6 is a schematic structural diagram of a resource configuration determining apparatus according to an embodiment of this application;
FIG. 7 is a schematic diagram I of a hardware structure of a UE according to an embodiment of this application; and
FIG. 8 is a schematic diagram II of a hardware structure of a UE according to an embodiment of this application.

## DETAILED DESCRIPTION

Technical solutions in embodiments of this application are clearly described below with reference to accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used to distinguish between similar objects rather than describe a specific order or sequence. It should be understood that the terms used in this way may be transposed where appropriate, so that embodiments of this application can be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" encompasses three solutions: solution I: A is included but B is not included; solution II: B is included but A is not included; and solution III: both A and B are included. The character "/" generally indicates an "or" relationship between associated objects.

A term "indication" in this application may be a direct indication (or an explicit indication) or an indirect indication (or an implicit indication). The direct indication may be understood as that a sending party clearly informs a receiving party of specific information, an operation to be performed, or a request result in the sent indication. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. However, the technologies may also be applied to systems other than the NR system, such as a 6th Generation (6th Generation, 6G) communication system.

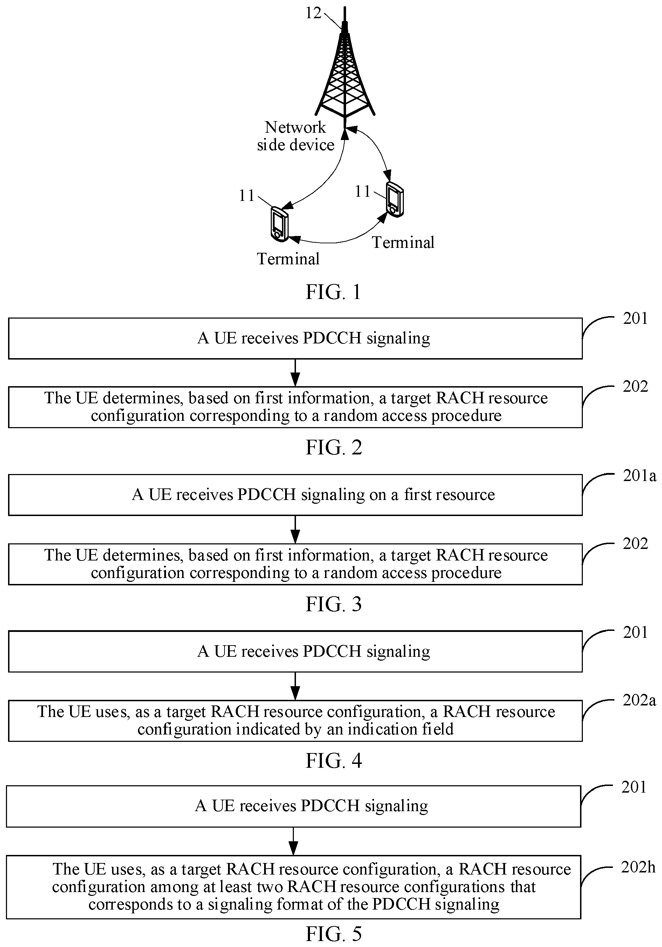

FIG. 1 is a block diagram of a wireless communication system to which embodiments of this application may be applied. The wireless communication system includes a UE 11 and a network side device 12. The UE 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the UE 11 is not limited in embodiments of this application. The network side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

Some concepts and/or terms involved in a data transmission method provided in embodiments of this application are explained below.

1. LTM

In the project of R18 mobility enhancement, LTM is introduced. Specifically, a serving base station determines the target cell based on a measurement result of a layer 1 of a UE, and uses a MAC CE to trigger the UE to hand over a primary cell or a primary secondary cell (or a master cell group or a secondary cell group) to a target cell (or a target cell group). In an LTM process, a network side prepares a plurality of candidate cells in advance, and sends configuration information of the candidate cells to the UE through RRC signaling, and after a cell change occurs in the UE, the configuration information of the candidate cells stored by the UE is not actively released. Therefore, the LTM may also be referred to as continuous LTM.

To reduce a time delay of a cell change, in the LTM process, an NW may trigger the UE to obtain a timing advance (timing advance, TA) value of a candidate cell in advance. The TA is configured for uplink transmission of the UE, with the purpose of ensuring that an uplink data packet of the UE arrives at a base station within a desired time. Specifically, the NW sends a PDCCH order to the UE, which carries an identifier of a candidate cell. After receiving the PDCCH order, the UE sends a preamble to the candidate cell indicated by the PDCCH order, and the candidate cell calculates a TA value of the UE based on the preamble. The R18 mobility enhancement project has agreed to carry indication information of the candidate cell and configuration information of a random access occasion of the candidate cell in the PDCCH order that triggers advanced acquisition of the TA of the candidate cell. In addition, the PDCCH order has 1 bit that is explicitly configured to indicate whether the PRACH transmission is an initial transmission or a retransmission.

2. Inter-cell multiple transmission and reception point supported by R18

During the inter-cell multiple transmission and reception point transmission between cells, in addition to an SSB configured by the current serving cell, an SSB associated with an additional PCI is further configured to measure an SSB of another physical cell. In this way, uplink and downlink data of the UE may be transmitted simultaneously between a local cell and a neighboring physical cell, thereby increasing data transmission throughput.

In the inter-cell multiple transmission and reception point transmission, since a TRP of the local cell and a TRP of a neighboring cell are generally deployed at different distances from the UE, uplink synchronization needs to be performed respectively for the TRP of the local cell and the TRP of the neighboring cell. Therefore, in addition to the RACH resource configuration of the local cell, a RACH resource configuration for each neighboring cell associated with an additional PCI is further configured. RACH procedures of the local cell and the neighboring cell are also triggered through the PDCCH order.

A resource configuration determining method provided in embodiments of this application is described in detail through some embodiments and application scenarios below with reference to the accompanying drawings.

In an LTM process, a RACH procedure of a candidate cell to be handed over needs to be triggered in advance through PDCCH signaling, to implement uplink synchronization with the candidate cell in advance. For an inter-cell multiple transmission and reception point (inter-cell mTRP) supported in R18, an RACH procedure between a transmission and reception point of a local cell and a TRP of a neighboring cell needs to be triggered through the PDCCH signaling, to implement uplink synchronization of the two TRPs. Since the RACH resource configuration of the local cell, an RACH resource configuration of the candidate cell, and the RACH resource configuration of the neighboring cell are separately configured, when a UE performs LTM, or performs inter-cell mTRP transmission, or performs both the LTM and the inter-cell mTRP transmission, the UE cannot determine a set of RACH resource configurations to which resource-related configuration information of a PRACH transmission indicated by the PDCCH signaling is to be mapped.

In the resource configuration determining method provided in embodiments of this application, a UE receives PDCCH signaling. The PDCCH signaling is used to trigger a random access procedure. The UE determines, based on first information, a target RACH resource configuration corresponding to the random access procedure. The first information is associated with the PDCCH signaling. The target RACH resource configuration is at least one of at least two RACH resource configurations configured for the UE. In this solution, after receiving the PDCCH signaling, the UE may determine, based on the first information associated with the PDCCH signaling, the target RACH resource configuration corresponding to the random access procedure from the at least two RACH resource configurations configured for the UE. Therefore, the UE may map, to the target RACH resource configuration, the resource-related configuration information of the PRACH transmission indicated by the PDCCH signaling.

An embodiment of this application provides a resource configuration determining method. FIG. 2 shows a flowchart of a resource configuration determining method according to an embodiment of this application. As shown in FIG. 2, the resource configuration determining method provided in this embodiment of this application may include the following step 201 and step 202.

Step 201: A UE receives PDCCH signaling.

In some embodiments of this application, the PDCCH signaling is used to trigger a random access procedure.

In some embodiments of this application, before receiving the PDCCH signaling, the UE may further receive first signaling. The first signaling is used to configure at least one of enabling of a first transmission mode and enabling of a second transmission mode for the UE.

In some embodiments of this application, the first transmission mode is an inter-cell mTRP transmission, and the second transmission mode is an LTM transmission.

In some embodiments of this application, the enabling of the first transmission mode indicates that higher-layer signaling is configured with a synchronization signal block (Synchronization Signal/PBCH block, SSB) associated with an additional physical cell identifier (Physical Cell Identifier, PCI), and a serving cell is associated with two timing advance groups (Timing Advance Group, TAG). The enabling of the second transmission mode indicates that higher-layer signaling includes an LTM configuration.

In some embodiments of this application, the first signaling may be the higher-layer signaling.

In some embodiments of this application, the first signaling may further be used to configure at least two RACH resource configurations for the UE.

In some embodiments of this application, the at least two RACH resource configurations include any one of the following:

a RACH resource configuration of a cell where the UE is located and a first set of RACH resource configurations;

the RACH resource configuration of the cell where the UE is located and a second set of RACH resource configurations; or

the RACH resource configuration of the cell where the UE is located, the first set of RACH resource configurations, and the second set of RACH resource configurations, where

the first set of RACH resource configurations includes a RACH resource configuration of a neighboring cell of the cell where the UE is located; and

the second set of RACH resource configurations includes a RACH resource configuration of a candidate cell.

In some embodiments of this application, the RACH resource configuration of the neighboring cell of the cell where the UE is located is associated with an additional PCI. The RACH resource configuration of the candidate cell is associated with a candidate cell index.

In some embodiments of this application, the RACH resource configuration of the cell where the UE is located is a RACH resource configuration of the serving cell.

In some embodiments of this application, the first transmission mode corresponds to the first set of RACH resource configurations, and the second transmission mode corresponds to the second set of RACH resource configurations.

In some embodiments of this application, when the first signaling is used to configure the enabling of the first transmission mode for the UE, the at least two RACH resource configurations may include the RACH resource configuration of the cell where the UE is located, and the first set of RACH resource configurations.

In some embodiments of this application, when the first signaling is used to configure the enabling of the second transmission mode for the UE, the at least two RACH resource configurations may include the RACH resource configuration of the cell where the UE is located, and the second set of RACH resource configurations.

In some embodiments of this application, when the first signaling is used to configure the enabling of the first transmission mode and the enabling of the second transmission mode for the UE, the at least two RACH resource configurations may include the RACH resource configuration of the cell where the UE is located, the first set of RACH resource configurations, and the second set of RACH resource configurations.

Step 202: The UE determines, based on first information, a target RACH resource configuration corresponding to a random access procedure.

In some embodiments of this application, the first information is associated with the PDCCH signaling, and the target RACH resource configuration is at least one of the at least two RACH resource configurations configured for the UE.

In some embodiments of this application, the first information includes any one of an indication field included in the PDCCH signaling, a signaling format of the PDCCH signaling, or a PDCCH resource for transmitting the PDCCH signaling.

In some embodiments of this application, the indication field is used by the UE to determine at least one RACH resource configuration from the at least two RACH resource configurations.

In some embodiments of this application, the UE may determine the target RACH resource configuration based on a value of the indication field included in PDCCH signaling.

In some embodiments of this application, a value included in the indication field may also be referred to as a value corresponding to the indication field, a value indicated by the indication field, or the like. This is not limited in embodiments of this application.

In some embodiments of this application, the PDCCH signaling may also be understood as DCI signaling sent on a PDCCH, for example, a DCI format 1_0.

In some embodiments of this application, the UE may monitor the PDCCH resource for transmitting the PDCCH signaling, and determine a RACH resource configuration corresponding to the PDCCH resource as the target RACH resource configuration.

In some embodiments of this application, when it is determined that the RACH resource configuration of the cell where the UE is located is the target RACH resource configuration, the UE does not interpret a cell indicator and a PRACH transmission indicator. When it is determined that the first set of RACH resource configurations is the target RACH resource configuration, the UE does not interpret the PRACH transmission indicator.

It should be noted that detailed steps for the UE to determine the target RACH resource configuration based on the first information are described in the following embodiments, and details are not described herein again.

An embodiment of this application provides a resource configuration determining method. A UE receives PDCCH signaling. The PDCCH signaling is used to trigger a random access procedure. The UE determines, based on first information, a target RACH resource configuration corresponding to the random access procedure. The first information is associated with the PDCCH signaling. The target RACH resource configuration is at least one of at least two RACH resource configurations configured for the UE. In this solution, after receiving the PDCCH signaling, the UE may determine, based on the first information associated with the PDCCH signaling, the target RACH resource configuration corresponding to the random access procedure from the at least two RACH resource configurations configured for the UE. Therefore, the UE may map, to the target RACH resource configuration, the resource-related configuration information of the PRACH transmission indicated by the PDCCH signaling.

In some embodiments of this application, the first information includes a PDCCH resource for transmitting the PDCCH signaling. The PDCCH resource includes at least one resource. Each resource corresponds to at least one RACH resource configuration among the at least two RACH resource configurations. With reference to FIG. 2, as shown in FIG. 3, the foregoing step 201 may be specifically implemented through the following step 201a.

Step 201a: The UE receives the PDCCH signaling on a first resource.

The first resource is one of the at least one resource, and the target RACH resource configuration is a RACH resource configuration corresponding to the first resource.

In some embodiments of this application, a protocol predefines a correspondence between the PDCCH resource and the RACH resource configuration, so that the UE can determine, as the target RACH resource configuration based on the correspondence when receiving PDCCH signaling, the RACH resource configuration corresponding to the first resource for transmitting the PDCCH signaling.

It may be understood that since the PDCCH signaling is transmitted on the PDCCH resource, the correspondence between the PDCCH resource and the RACH resource configuration may be configured, so that when the UE monitors the PDCCH signaling on a certain PDCCH resource, the UE can determine the RACH resource configuration corresponding to the certain PDCCH resource as the target RACH resource configuration.

In some embodiments of this application, the PDCCH resource may be divided into a first resource, a second resource, and a third resource, and then the settings are such that the first resource corresponds to the RACH resource configuration of the cell where the UE is located in the at least two RACH resource configurations, the second resource corresponds to a first set of RACH resource configurations among the at least two RACH resource configurations, and the third resource corresponds to a second set of RACH resource configurations among the at least two RACH resource configurations. The correspondences are sent to the UE.

For example, when monitoring the PDCCH signaling on the second resource, the UE may determine the first set of RACH resource configurations corresponding to the second resource as the target RACH resource configuration.

In some embodiments of this application, that the second resource corresponds to the first set of RACH resource configurations may be understood as that the second resource corresponds to at least one RACH resource configuration in the first set of RACH resource configurations. Similarly, that the third resource corresponds to the second set of RACH resource configurations may be understood as that the third resource corresponds to at least one RACH resource configuration in the second set of RACH resource configurations.

In some embodiments of this application, a protocol may predefine only a correspondence between the PDCCH resource and the first set of RACH resource configurations and the second set of RACH resource configurations. After the UE receives the PDCCH signaling on the first resource, the UE may further determine the target RACH resource configuration based on the RACH resource configuration corresponding to the first resource and a sixth indication field.

In some embodiments of this application, when the RACH resource configuration indicated by the sixth indication field belongs to the RACH resource configuration corresponding to the first resource, the UE may use, as the target RACH resource configuration, the RACH resource configuration indicated by the sixth indication field. When the RACH resource configuration indicated by the sixth indication field does not belong to the RACH resource configuration corresponding to the first resource, the UE may use, as the target RACH resource configuration, the RACH resource configuration of the cell where the UE is located.

In some embodiments of this application, when a value included in the sixth indication field is a preset value, the UE may determine that the RACH resource configuration indicated by the sixth indication field is the RACH resource configuration of the cell where the UE is located.

In some embodiments of this application, when the value included in the sixth indication field is not the preset value, the UE may determine that the RACH resource configuration indicated by the sixth indication field is a RACH resource configuration among the RACH resource configurations corresponding to the first resource.

In some embodiments of this application, when the RACH resource configuration corresponding to the first resource is the first set of RACH resource configurations, and the sixth indication field indicates a RACH resource configuration in the first set of RACH resource configurations, for example, when the value included in the sixth indication field is not the preset value, the UE may determine that the RACH resource configuration indicated by the sixth indication field belongs to the RACH resource configuration corresponding to the first resource. In this way, the UE may use, as the target RACH resource configuration, a RACH resource configuration in the first set of RACH resource configurations indicated by the sixth indication field.

In some embodiments of this application, a value range of the sixth indication field depends on a quantity of RACH resource configurations included in the first set of RACH resource configurations. When the quantity of RACH resource configurations included in the first set of RACH resource configurations is N, a value range of values included in the sixth indication field is 0 to N, where 0 is the preset value.

In some embodiments of this application, a bit length of the sixth indication field may be $[\log10(N)]$, or $[\log10(N+2)]$.

Optionally, when the value included in the sixth indication field is 0, the RACH resource configuration indicated by the sixth indication field is the RACH resource configuration of the cell where the UE is located. When the value included in the sixth indication field is any one of 1 to N, the RACH resource configuration indicated by the sixth indication field is a RACH resource configuration in the first set of RACH resource configurations.

Further, an identifier may be assigned to each of the N RACH resource configurations included in the first set of RACH resource configurations, for example, RACH resource configuration_1 to RACH resource configuration_N, where one identifier corresponds to a value of 1 to N. For example, RACH resource configuration_1 corresponds to the value 1, and the correspondence is sent to the UE.

For example, when the value included in the sixth indication field is 6, the UE may determine, based on the value 6, that the RACH resource configuration indicated by the sixth indication field is the RACH resource configuration_6 in the first set of RACH resource configurations.

In some embodiments of this application, when the RACH resource configuration corresponding to the first resource is the second set of RACH resource configurations, and the sixth indication field indicates a RACH resource configuration in the second set of RACH resource configurations, for example, when the value included in the sixth indication field is not the preset value, the UE may determine that the RACH resource configuration indicated by the sixth indication field belongs to the RACH resource configuration corresponding to the first resource. In this way, the UE may use, as the target RACH resource configuration, a RACH resource configuration in the second set of RACH resource configurations indicated by the sixth indication field.

In some embodiments of this application, a value range of the sixth indication field depends on a quantity of RACH resource configurations included in the second set of RACH resource configurations. When the quantity of RACH resource configurations included in the second set of RACH resource configurations is M, a value range of values included in the sixth indication field is 0 to M, where 0 is the preset value.

In some embodiments of this application, a bit length of the sixth indication field may be $\lceil \log 10(M) \rceil$, or $\lceil \log 10(M+2) \rceil$.

Optionally, when the value included in the sixth indication field is 0, the RACH resource configuration indicated by the sixth indication field is the RACH resource configuration of the cell where the UE is located. When the value included in the sixth indication field is any one of 1 to M, the RACH resource configuration indicated by the sixth indication field is a RACH resource configuration in the second set of RACH resource configurations.

Further, an identifier may be assigned to each of the M RACH resource configurations included in the second set of RACH resource configurations, for example, RACH resource configuration_1 to RACH resource configuration_M, where one identifier corresponds to a value of 1 to M. For example, RACH resource configuration_1 corresponds to the value 1, and the correspondence is sent to the UE.

For example, when the value included in the sixth indication field is 3, the UE may determine, based on the value 3, that the RACH resource configuration indicated by the sixth indication field is the RACH resource configuration_3 in the second set of RACH resource configurations.

In some embodiments of this application, when the RACH resource configuration corresponding to the first resource is the first set of RACH resource configurations, and the RACH resource configuration indicated by the sixth indication field is the RACH resource configuration of the cell where the UE is located, for example, when the value included in the sixth indication field is the preset value, the UE may determine that the RACH resource configuration indicated by the sixth indication field does not belong to the RACH resource configuration corresponding to the first resource. In this way, the UE may use, as the target RACH resource configuration, the RACH resource configuration of the cell where the UE is located.

In some embodiments of this application, when the RACH resource configuration corresponding to the first resource is the second set of RACH resource configurations, and the RACH resource configuration indicated by the sixth indication field is the RACH resource configuration of the cell where the UE is located, for example, when the value included in the sixth indication field is the preset value, the UE may determine that the RACH resource configuration indicated by the sixth indication field does not belong to the RACH resource configuration corresponding to the first resource. In this way, the UE may use, as the target RACH resource configuration, the RACH resource configuration of the cell where the UE is located.

In this way, when monitoring the PDCCH signaling on a PDCCH resource, the UE may determine, based on the correspondence between the PDCCH resource and the RACH resource configuration, a RACH resource configuration corresponding to the PDCCH resource as the target RACH resource configuration, thereby improving flexibility of determining the target RACH resource configuration by the UE.

In some embodiments of this application, the first information includes an indication field. With reference to FIG. 2, as shown in FIG. 4, the foregoing step 202 may be specifically implemented through the following step 202a.

Step 202a: The UE uses, as the target RACH resource configuration, a RACH resource configuration indicated by an indication field.

In some embodiments of this application, the UE may determine the target RACH resource configuration based on the value included in the indication field.

In some embodiments of this application, the protocol predefines a correspondence between the value included in the indication field and the RACH resource configuration, so that when receiving the PDCCH signaling, the UE can determine the target RACH resource configuration based on the indication field included in the PDCCH signaling.

It may be understood that after receiving the PDCCH signaling, the UE may parse the indication field included in the PDCCH signaling, and when the indication field includes a value, the UE may determine a RACH resource configuration corresponding to the value as the target RACH resource configuration.

For example, the settings may be such that a value 1 corresponds to a RACH resource configuration of the cell where the UE is located among the at least two RACH resource configurations, a value 2 corresponds to a first set of RACH resource configurations among the at least two RACH resource configurations, and a value 3 corresponds to a second set of RACH resource configurations among the at least two RACH resource configurations.

For example, when the UE receives the PDCCH signaling, and parses that the value corresponding to the indication field included in the PDCCH signaling is 1, the UE may determine, as the target RACH resource configuration, the RACH resource configuration of the cell where the UE is located that corresponds to the value 1.

In some embodiments of this application, the protocol may predefine only a correspondence between the value included in the indication field and the first set of RACH resource configurations and the second set of RACH resource configurations. After receiving the PDCCH signaling, the UE may further determine the target RACH resource configuration based on the RACH resource configuration corresponding to the value included in the indication field in the PDCCH signaling and a sixth indication field.

In some embodiments of this application, when the RACH resource configuration indicated by the sixth indication field belongs to the RACH resource configuration corresponding to the value included in the indication field, the UE may use, as the target RACH resource configuration, the RACH resource configuration indicated by the sixth indication field. When the RACH resource configuration indicated by the sixth indication field does not belong to the RACH resource configuration corresponding to the value included in the indication field, the UE may use, as the target RACH resource configuration, the RACH resource configuration of the cell where the UE is located.

In some embodiments of this application, when the value included in the sixth indication field is the preset value, the UE may determine that the RACH resource configuration indicated by the sixth indication field is the RACH resource configuration of the cell where the UE is located.

In some embodiments of this application, when the value included in the sixth indication field is not the preset value, the UE may determine that the RACH resource configuration indicated by the sixth indication field is a RACH resource configuration among the RACH resource configurations corresponding to the value included in the indication field.

In some embodiments of this application, when the RACH resource configuration corresponding to the value included in the indication field is the first set of RACH resource configurations, and the sixth indication field indicates a RACH resource configuration in the first set of RACH resource configurations, for example, when the value included in the sixth indication field is not the preset value, the UE may determine that the RACH resource configuration indicated by the sixth indication field belongs to the RACH resource configuration corresponding to the value included in the indication field. In this way, the UE may use, as the target RACH resource configuration, a RACH resource configuration in the first set of RACH resource configurations indicated by the sixth indication field.

For example, when the value included in the indication field is 1, and the value included in the sixth indication field is 5, the UE may determine RACH resource configuration_5 in the first set of RACH resource configurations as the target RACH resource configuration.

It should be noted that for detailed steps of determining, as the target RACH resource configuration, a RACH resource configuration among the first set of RACH resource configurations indicated by the sixth indication field, reference may be made to descriptions in the foregoing embodiments, and details are not described herein again.

In some embodiments of this application, when the RACH resource configuration corresponding to the value included in the indication field is the second set of RACH resource configurations, and the sixth indication field indicates a RACH resource configuration in the second set of RACH resource configurations, for example, when the value included in the sixth indication field is not the preset value, the UE may determine that the RACH resource configuration indicated by the sixth indication field belongs to the RACH resource configuration corresponding to the value included in the indication field. In this way, the UE may use, as the target RACH resource configuration, a RACH resource configuration in the second set of RACH resource configurations indicated by the sixth indication field.

For example, when the value included in the indication field is 2, and the value included in the sixth indication field is 4, the UE may determine RACH resource configuration_4 in the second set of RACH resource configurations as the target RACH resource configuration.

It should be noted that for detailed steps of determining, as the target RACH resource configuration, a RACH resource configuration among the second set of RACH resource configurations indicated by the sixth indication field, reference may be made to descriptions in the foregoing embodiments, and details are not described herein again.

In some embodiments of this application, when the RACH resource configuration corresponding to the value included in the indication field is the first set of RACH resource configurations, and the RACH resource configuration indicated by the sixth indication field is the RACH resource configuration of the cell where the UE is located, for example, when the value included in the sixth indication field is the preset value, the UE may determine that the RACH resource configuration indicated by the sixth indication field does not belong to the RACH resource configuration corresponding to the value included in the indication field. In this way, the UE may use, as the target RACH resource configuration, the RACH resource configuration of the cell where the UE is located.

For example, when the value included in the indication field is 1, and the value included in the sixth indication field is 0, the UE may determine, as the target RACH resource configuration, the RACH resource configuration of the cell where the UE is located.

In some embodiments of this application, when the RACH resource configuration corresponding to the value included in the indication field is the second set of RACH resource configurations, and the RACH resource configuration indicated by the sixth indication field is the RACH resource configuration of the cell where the UE is located, for example, when the value included in the sixth indication field is the preset value, the UE may determine that the RACH resource configuration indicated by the sixth indication field does not belong to the RACH resource configuration corresponding to the value included in the indication field. In this way, the UE may use, as the target RACH resource configuration, the RACH resource configuration of the cell where the UE is located.

For example, when the value included in the indication field is 2, and the value included in the sixth indication field is 0, the UE may determine, as the target RACH resource configuration, the RACH resource configuration of the cell where the UE is located.

Therefore, after receiving the PDCCH signaling, the UE may parse the indication field included in the PDCCH signaling, to determine a RACH resource configuration corresponding to a value as the target RACH resource configuration when the indication field includes the value, thereby improving flexibility and diversity of determining the target RACH resource configuration by the UE.

In some embodiments of this application, the first information includes the indication field. The indication field includes a first indication field and a second indication field. The foregoing step 202 may be specifically implemented through the following step 202b or step 202c.

Step 202b: The UE uses, as the target RACH resource configuration, the RACH resource configuration of the cell where the UE is located when values of the first indication field and the second indication field are both preset values.

In some embodiments of this application, the UE may determine the target RACH resource configuration based on a value included in each of the first indication field and the second indication field.

In some embodiments of this application, the protocol predefines a correspondence between the RACH resource configuration of the cell where the UE is located and the preset value, so that when it is parsed that the value included in each of the first indication field and the second indication field is the preset value, the UE may determine, as the target RACH resource configuration, the RACH resource configuration of the cell where the UE is located.

For example, the preset value may be 0. When it is parsed that the first indication field and the second indication field both include the value of 0, the UE may determine, as the target RACH resource configuration, the RACH resource configuration of the cell where the UE is located.

Step 202c: When the values of the first indication field and the second indication field are different, the UE uses, as the target RACH resource configuration, the RACH resource configuration indicated by a target indication field.

In some embodiments of this application, a value of the target indication field is not the preset value.

In some embodiments of this application, when a first value included in the first indication field is different from a second value included in the second indication field, the UE may use, as the target RACH resource configuration, the RACH resource configuration indicated by the target indication field.

In some embodiments of this application, the first indication field corresponds to the first set of RACH resource configurations, and the second indication field corresponds to the second set of RACH resource configurations.

For example, when the value included in the first indication field is not 0, and the value included in the second indication field is 0, the UE may determine that the target indication field is the first indication field. In this way, the UE may use the first set of RACH resource configurations corresponding to the first indication field as the target RACH resource configuration.

For example, when the UE receives the PDCCH signaling, and parses that the value corresponding to the first indication field included in the PDCCH signaling is 5, and the value corresponding to the second indication field is 0, the UE may use, as the target RACH resource configuration, the first set of RACH resource configurations indicated by the first indication field.

For example, when the value included in the first indication field is 0, and the value included in the second indication field is not 0, the UE may determine that the target indication field is the second indication field. In this way, the UE may use, as the target RACH resource configuration, the second set of RACH resource configurations corresponding to the second indication field.

For example, when the UE receives the PDCCH signaling, and parses that the value corresponding to the first indication field included in the PDCCH signaling is 0, and the value corresponding to the second indication field is 2, the UE may use, as the target RACH resource configuration, the second set of RACH resource configurations indicated by the second indication field.

Therefore, after receiving the PDCCH signaling, the UE may parse the first indication field and the second indication field that are included in the PDCCH signaling, and use, as the target RACH resource configuration, a RACH resource configuration of the cell where the UE is located when the values of the first indication field and the second indication field are both preset values. When the values of the first indication field and the second indication field are different, the RACH resource configuration indicated by the target indication field is used as the target RACH resource configuration, thereby improving flexibility and diversity of determining the target RACH resource configuration by the UE.

In some embodiments of this application, the first information includes the indication field. The indication field includes a third indication field and a fourth indication field. The third indication field indicates any one of the following: the RACH resource configuration of the cell where the UE is located and the first set of RACH resource configurations, or the RACH resource configuration of the cell where the UE is located and the second set of RACH resource configurations. The first set of RACH resource configurations includes a RACH resource configuration of a neighboring cell of the cell where the UE is located. The second set of RACH resource configurations includes a RACH resource configuration of a candidate cell. The foregoing step 202 may be specifically implemented through the following step 202d, or step 202e, or step 202f, or step 202g.

Step 202d: The UE uses the first set of RACH resource configurations as the target RACH resource configuration when the third indication field indicates the RACH resource configuration of the cell where the UE is located and the first set of RACH resource configurations, and a RACH resource configuration indicated by the fourth indication field belongs to the first set of RACH resource configurations.

In some embodiments of this application, after receiving the PDCCH signaling, the UE may obtain the third indication field and the fourth indication field that are included in the PDCCH signaling. When the third indication field indicates the RACH resource configuration of the cell where the UE is located and the first set of RACH resource configurations, the UE may determine, based on the value included in the fourth indication field, the RACH resource configuration indicated by the fourth indication field, and use the first set of RACH resource configurations as the target RACH resource configuration when the RACH resource configuration indicated by the fourth indication field belongs to the first set of RACH resource configurations.

In some embodiments of this application, the protocol predefines a correspondence between the value included in the third indication field and a first configuration. The first configuration is any one of the following: the RACH resource configuration of the cell where the UE is located and the first set of RACH resource configurations, and the RACH resource configuration of the cell where the UE is located and the second set of RACH resource configurations, and is sent to the UE. In this way, when receiving the PDCCH signaling, the UE may determine, based on the third indication field included in the PDCCH signaling, the RACH resource configuration indicated by the third indication field.

For example, the settings may be such that the value 1 corresponds to the RACH resource configuration of the cell where the UE is located and the first set of RACH resource configurations, and the value 2 corresponds to the RACH resource configuration of the cell where the UE is located and the second set of RACH resource configurations.

In some embodiments of this application, when the value included in the fourth indication field is not the preset value, the UE may determine that the RACH resource configuration indicated by the fourth indication field belongs to the first set of RACH resource configurations.

For example, when the value included in the third indication field is 1, and the value included in the fourth indication field is 5, the UE may determine that the third indication field indicates the RACH resource configuration of the cell where the UE is located and the first set of RACH resource configurations, and the RACH resource configuration indicated by the fourth indication field belongs to the first set of RACH resource configurations, so that the UE can determine the first set of RACH resource configurations as the target RACH resource configuration.

Step 202e: When the third indication field indicates the RACH resource configuration of the cell where the UE is located and the first set of RACH resource configurations, and the RACH resource configuration indicated by the fourth indication field does not belong to the first set of RACH resource configurations, the UE uses, as the target RACH resource configuration, the RACH resource configuration of the cell where the UE is located.

In some embodiments of this application, after receiving the PDCCH signaling, the UE may obtain the third indication field and the fourth indication field that are included in the PDCCH signaling. When the third indication field indicates the RACH resource configuration of the cell where the UE is located and the first set of RACH resource configurations, the UE may determine, based on the value included in the fourth indication field, the RACH resource configuration indicated by the fourth indication field, and use, as the target RACH resource configuration, the RACH resource configuration of the cell where the UE is located when the RACH resource configuration indicated by the fourth indication field belongs to the first set of RACH resource configurations.

In some embodiments of this application, when the value included in the fourth indication field is the preset value, the UE may determine that the RACH resource configuration indicated by the fourth indication field is the RACH resource configuration of the cell where the UE is located, and the RACH resource configuration indicated by the fourth indication field does not belong to the first set of RACH resource configurations.

For example, when the value included in the third indication field is 1, and the value included in the fourth indication field is 0, the UE may determine that the third indication field indicates the RACH resource configuration of the cell where the UE is located and the first set of RACH resource configurations, and the RACH resource configuration indicated by the fourth indication field belongs to the first set of RACH resource configurations, so that the UE can determine, as the target RACH resource configuration, the RACH resource configuration of the cell where the UE is located.

Step 202f: The UE uses the second set of RACH resource configurations as the target RACH resource configuration when the third indication field indicates the RACH resource configuration of the cell where the UE is located and the second set of RACH resource configurations, and a RACH resource configuration indicated by the fourth indication field belongs to the second set of RACH resource configurations.

In some embodiments of this application, after receiving the PDCCH signaling, the UE may obtain the third indication field and the fourth indication field that are included in the PDCCH signaling. When the third indication field indicates the RACH resource configuration of the cell where the UE is located and the second set of RACH resource configurations, the UE may determine, based on the value included in the fourth indication field, the RACH resource configuration indicated by the fourth indication field, and use the second set of RACH resource configurations as the target RACH resource configuration when the RACH resource configuration indicated by the fourth indication field belongs to the second set of RACH resource configurations.

For example, when the value included in the third indication field is 2, and the value included in the fourth indication field is 5, the UE may determine that the third indication field indicates the RACH resource configuration of the cell where the UE is located and the second set of RACH resource configurations, and the RACH resource configuration indicated by the fourth indication field belongs to the second set of RACH resource configurations, so that the UE can determine the second set of RACH resource configurations as the target RACH resource configuration.

Step 202g: When the third indication field indicates the RACH resource configuration of the cell where the UE is located and the second set of RACH resource configurations, and the RACH resource configuration indicated by the fourth indication field does not belong to the second set of RACH resource configurations, the UE uses, as the target RACH resource configuration, the RACH resource configuration of the cell where the UE is located.

In some embodiments of this application, after receiving the PDCCH signaling, the UE may obtain the third indication field and the fourth indication field that are included in the PDCCH signaling. When the third indication field indicates the RACH resource configuration of the cell where the UE is located and the second set of RACH resource configurations, the UE may determine, based on the value included in the fourth indication field, the RACH resource configuration indicated by the fourth indication field, and use, as the target RACH resource configuration, the RACH resource configuration of the cell where the UE is located when the RACH resource configuration indicated by the fourth indication field belongs to the second set of RACH resource configurations.

For example, when the value included in the third indication field is 2, and the value included in the fourth indication field is 0, the UE may determine that the third indication field indicates the RACH resource configuration of the cell where the UE is located and the second set of RACH resource configurations, and the RACH resource configuration indicated by the fourth indication field belongs to the second set of RACH resource configurations, so that the UE can determine, as the target RACH resource configuration, the RACH resource configuration of the cell where the UE is located.

Therefore, after receiving the PDCCH signaling, the UE may obtain the third indication field and the fourth indication field that are included in the PDCCH signaling, and determine the target RACH resource configuration based on an indication of the third indication field and an indication of the fourth indication field, thereby improving flexibility and diversity of determining the target RACH resource configuration by the UE.

In some embodiments of this application, the first information includes a signaling format of the PDCCH signaling. With reference to FIG. 2, as shown in FIG. 5, the foregoing step 202 may be specifically implemented through the following step 202h.

Step 202h: The UE uses, as the target RACH resource configuration, the RACH resource configuration among the at least two RACH resource configurations that corresponds to the signaling format of the PDCCH signaling.

In some embodiments of this application, a protocol predefines a correspondence between the signaling format and the RACH resource configuration, and sends the correspondence to the UE. When receiving the PDCCH signaling, the UE may determine the target RACH resource configuration based on the signaling format of the PDCCH signaling.

It may be understood that after receiving the PDCCH signaling, the UE may obtain the signaling format of the PDCCH signaling to determine the RACH resource configuration corresponding to the signaling format as the target RACH resource configuration.

For example, the settings may be such that a signaling format 1 corresponds to a RACH resource configuration of the cell where the UE is located among the at least two RACH resource configurations, a signaling format 2 corresponds to a first set of RACH resource configurations among the at least two RACH resource configurations, and a signaling format 3 corresponds to a second set of RACH resource configurations among the at least two RACH resource configurations.

For example, when the UE receives the PDCCH signaling, and parses that the signaling format of the PDCCH signaling is PDCCH format 1_0 (the signaling format 1), the UE may determine, as the target RACH resource configuration, the RACH resource configuration of the cell where the UE is located that corresponds to the signaling format 1.

In some embodiments of this application, the protocol may predefine only a correspondence between the signaling format and the first set of RACH resource configurations and the second set of RACH resource configurations, and the correspondence is sent to the UE. After receiving the PDCCH signaling, the UE may further determine the target RACH resource configuration based on the RACH resource configuration corresponding to the signaling format of the PDCCH signaling and a sixth indication field.

In some embodiments of this application, when the RACH resource configuration indicated by the sixth indication field belongs to the RACH resource configuration corresponding to the signaling format, the UE may use, as the target RACH resource configuration, the RACH resource configuration indicated by the sixth indication field. When the RACH resource configuration indicated by the sixth indication field does not belong to the RACH resource configuration corresponding to the signaling format, the UE may use, as the target RACH resource configuration, the RACH resource configuration of the cell where the UE is located.

In some embodiments of this application, when the value included in the sixth indication field is a preset value, the UE may determine that the RACH resource configuration indicated by the sixth indication field is the RACH resource configuration of the cell where the UE is located.

In some embodiments of this application, when the value included in the sixth indication field is not the preset value, the UE may determine that the RACH resource configuration indicated by the sixth indication field is a RACH resource configuration among the RACH resource configurations corresponding to the signaling format.

In some embodiments of this application, when the RACH resource configuration corresponding to the signaling format is the first set of RACH resource configurations, the sixth indication field indicates a RACH resource configuration in the first set of RACH resource configurations, and the value included in the sixth indication field is not the preset value, the UE may determine that the RACH resource configuration indicated by the sixth indication field belongs to the RACH resource configuration corresponding to the signaling format. In this way, the UE may use, as the target RACH resource configuration, a RACH resource configuration in the first set of RACH resource configurations indicated by the sixth indication field.

For example, when the signaling format is the signaling format 1, and the value included in the sixth indication field is 5, the UE may determine RACH resource configuration_5 in the first set of RACH resource configurations as the target RACH resource configuration.

It should be noted that for detailed steps of determining, as the target RACH resource configuration, a RACH resource configuration among the first set of RACH resource configurations indicated by the sixth indication field, reference may be made to descriptions in the foregoing embodiments, and details are not described herein again.

In some embodiments of this application, when the RACH resource configuration corresponding to the signaling format is the second set of RACH resource configurations, the sixth indication field indicates a RACH resource configuration in the second set of RACH resource configurations, and the value included in the sixth indication field is not the preset value, the UE may determine that the RACH resource configuration indicated by the sixth indication field belongs to the RACH resource configuration corresponding to the signaling format. In this way, the UE may use, as the target RACH resource configuration, a RACH resource configuration in the second set of RACH resource configurations indicated by the sixth indication field.

For example, when the signaling format is the signaling format 2, and the value included in the sixth indication field is 7, the UE may determine, as the target RACH resource configuration, RACH resource configuration_7 in the second set of RACH resource configurations.

It should be noted that for detailed steps of determining, as the target RACH resource configuration, a RACH resource configuration among the second set of RACH resource configurations indicated by the sixth indication field, reference may be made to descriptions in the foregoing embodiments, and details are not described herein again.

In some embodiments of this application, when the RACH resource configuration corresponding to the signaling format is the first set of RACH resource configurations, the RACH resource configuration indicated by the sixth indication field is the RACH resource configuration of the cell where the UE is located, and the value included in the sixth indication field is the preset value, the UE may determine that the RACH resource configuration indicated by the sixth indication field does not belong to the RACH resource configuration corresponding to the signaling format. In this way, the UE may use, as the target RACH resource configuration, the RACH resource configuration of the cell where the UE is located.

For example, when the signaling format is the signaling format 1, and the value included in the sixth indication field is 0, the UE may determine, as the target RACH resource configuration, the RACH resource configuration of the cell where the UE is located.

In some embodiments of this application, when the RACH resource configuration corresponding to the signaling format is the second set of RACH resource configurations, the RACH resource configuration indicated by the sixth indication field is the RACH resource configuration of the cell where the UE is located, and the value included in the sixth indication field is the preset value, the UE may determine that the RACH resource configuration indicated by the sixth indication field does not belong to the RACH resource configuration corresponding to the signaling format. In this way, the UE may use, as the target RACH resource configuration, the RACH resource configuration of the cell where the UE is located.

For example, when the signaling format is the signaling format 2, and the value included in the sixth indication field is 0, the UE may determine, as the target RACH resource configuration, the RACH resource configuration of the cell where the UE is located.

Therefore, after receiving the PDCCH signaling, the UE may obtain the signaling format of the PDCCH signaling, to determine the RACH resource configuration corresponding to the signaling format as the target RACH resource configuration, thereby improving flexibility and diversity of determining the target RACH resource configuration by the UE.

In some embodiments of this application, the PDCCH signaling includes a fifth indication field. The foregoing Step 202 may be specifically implemented through the following step 202i and step 202j.

Step 202i: The UE determines a first RACH resource configuration from the at least two RACH resource configurations based on the first information.

The first RACH resource configuration is a first set of RACH resource configurations or a second set of RACH resource configurations.

The first set of RACH resource configurations includes a RACH resource configuration of a neighboring cell of the cell where the UE is located; and

the second set of RACH resource configurations includes a RACH resource configuration of a candidate cell.

In some embodiments of this application, after the UE first determines the first set of RACH resource configurations or the second set of RACH resource configurations from the at least two RACH resource configurations based on the indication field, or the signaling format of the PDCCH signaling, or the PDCCH resource transmitting the PDCCH signaling, the UE may further determine the target RACH resource configuration from the first set of RACH resource configurations or the second set of RACH resource configurations based on the fifth indication field.

It should be noted that for detailed steps for the UE to determine the first RACH resource configuration from the at least two RACH resource configurations based on the first information, reference may be made to the descriptions in the foregoing embodiments, and details are not described herein again.

Step 202j: The UE determines the target RACH resource configuration from the first RACH resource configuration based on the fifth indication field.

In some embodiments of this application, the protocol predefines a correspondence between a value included in the fifth indication field and N RACH resource configurations in the first set of RACH resource configurations, and the correspondence is sent to the UE, so that when receiving the PDCCH signaling, the UE may determine, based on the fifth indication field included in the PDCCH signaling, which RACH resource configuration in the first set of RACH resource configurations is indicated by the fifth indication field.

In some embodiments of this application, a value range of the fifth indication field depends on a quantity of RACH resource configurations included in the first set of RACH resource configurations. When the quantity of RACH resource configurations included in the first set of RACH resource configurations is N, a value range of values included in the fifth indication field is 0 to N, where 0 is the preset value.

In some embodiments of this application, a bit length of the fifth indication field may be $\lceil \log 10(N) \rceil$, or $\lceil \log 10(N+2) \rceil$.

It may be understood that when the value included in the fifth indication field is any one of 1 to N, the RACH resource configuration indicated by the fifth indication field is a RACH resource configuration in the first set of RACH resource configurations that corresponds to the value included in the fifth indication field.

For example, when the value included in the fifth indication field is 6, the UE may determine, based on the value 6, that the RACH resource configuration indicated by the fifth indication field is the RACH resource configuration_6 in the first set of RACH resource configurations.

In some embodiments of this application, when the value included in the fifth indication field is 0, the RACH resource configuration indicated by the fifth indication field is the RACH resource configuration of the cell where the UE is located.

In some embodiments of this application, the protocol predefines a correspondence between the value included in the fifth indication field and N RACH resource configurations in the second set of RACH resource configurations, and the correspondence is sent to the UE, so that when receiving the PDCCH signaling, the UE may determine, based on the fifth indication field included in the PDCCH signaling, which RACH resource configuration in the second set of RACH resource configurations is indicated by the fifth indication field.

In some embodiments of this application, a value range of the fifth indication field depends on a quantity of RACH resource configurations included in the second set of RACH resource configurations. When the quantity of RACH resource configurations included in the second set of RACH resource configurations is M, a value range of values included in the fifth indication field is 0 to M, where 0 is the preset value.

In some embodiments of this application, a bit length of the fifth indication field may be $\lceil \log 10(M) \rceil$, or $\lceil \log 10(M+2) \rceil$.

It may be understood that when the value included in the fifth indication field is any one of 1 to M, the RACH resource configuration indicated by the fifth indication field is a RACH resource configuration in the second set of RACH resource configurations that corresponds to the value included in the fifth indication field.

For example, when the value included in the fifth indication field is 3, the UE may determine, based on the value 6, that the RACH resource configuration indicated by the fifth indication field is the RACH resource configuration_3 in the second set of RACH resource configurations.

In some embodiments of this application, when the value included in the fifth indication field is 0, the RACH resource configuration indicated by the fifth indication field is the RACH resource configuration of the cell where the UE is located.

In some embodiments of this application, when the RACH resource configuration indicated by the fifth indication field is the first set of RACH resource configurations, and the first set of RACH resource configurations includes N RACH resource configurations, a size of the fifth indication field depends on a maximum value of N. When the RACH resource configuration indicated by the fifth indication field is the first set of RACH resource configurations, and the first set of RACH resource configurations includes M RACH resource configurations, a size of the fifth indication field depends on a maximum value of M.

The resource configuration determining method provided in embodiments of this application may be performed by a resource configuration determining apparatus. In embodiments of this application, a resource configuration determining apparatus provided in embodiments of this application is described by using an example in which the resource configuration determining apparatus performs the resource configuration determining method.

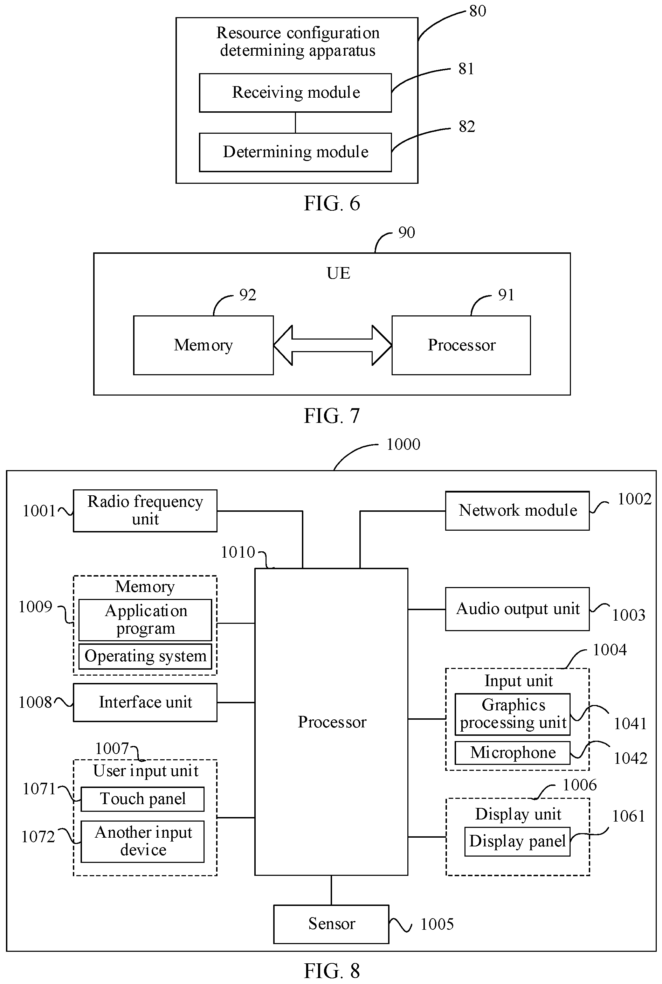

FIG. 6 is a possible schematic structural diagram of a resource configuration determining apparatus involved in an embodiment of this application. As shown in FIG. 6, the resource configuration determining apparatus 80 may include a receiving module 81 and a determining module 82.

The receiving module 81 is configured to receive physical downlink control channel PDCCH signaling, where the PDCCH signaling is used to trigger a random access procedure.

The determining module 82 is configured to determine a target random access channel RACH resource configuration based on first information. The first information is associated with the PDCCH signaling. The target RACH resource configuration is at least one of at least two RACH resource configurations configured for the UE.

An embodiment of this application provides a resource configuration determining apparatus. After receiving the PDCCH signaling, the resource configuration determining apparatus may determine, based on the first information associated with the PDCCH signaling, the target RACH resource configuration corresponding to the random access procedure from the at least two RACH resource configurations configured for the resource configuration determining apparatus. Therefore, the resource configuration determining apparatus may map, to the target RACH resource configuration, the resource-related configuration information of the PRACH transmission indicated by the PDCCH signaling.

In a possible implementation, the at least two RACH resource configurations include any one of the following:

a RACH resource configuration of a cell where the UE is located and a first set of RACH resource configurations;
the RACH resource configuration of the cell where the UE is located and a second set of RACH resource configurations; or
the RACH resource configuration of the cell where the UE is located, the first set of RACH resource configurations, and the second set of RACH resource configurations, where the first set of RACH resource configurations includes a RACH resource configuration of a neighboring cell of the cell where the UE is located, and the second set of RACH resource configurations includes a RACH resource configuration of a candidate cell.

In a possible implementation, the first information includes any one of an indication field included in the PDCCH signaling, a signaling format of the PDCCH signaling, or a PDCCH resource for transmitting the PDCCH signaling, where the indication field is used by the UE to determine at least one RACH resource configuration from the at least two RACH resource configurations.

In a possible implementation, the first information includes an indication field. The determining module 82 is specifically configured to use, as the target RACH resource configuration, the RACH resource configuration indicated by the indication field.

In a possible implementation, the first information includes the indication field. The indication field includes a first indication field and a second indication field. The determining module 82 is specifically configured to:

use, as the target RACH resource configuration, the RACH resource configuration of the cell where the UE is located when values of the first indication field and the second indication field are both preset values; and
use, as the target RACH resource configuration, a RACH resource configuration indicated by a target indication field when the values of the first indication field and the second indication field are different, where a value of the target indication field is not a preset value.

In a possible implementation, the first information includes the indication field. The indication field includes a third indication field and a fourth indication field.

The third indication field indicates any one of the following: the RACH resource configuration of the cell where the UE is located and the first set of RACH resource configurations, or the RACH resource configuration of the cell where the UE is located and the second set of RACH resource configurations. The first set of RACH resource configurations includes a RACH resource configuration of a neighboring cell of the cell where the UE is located. The second set of RACH resource configurations includes a RACH resource configuration of a candidate cell.

The determining module 82 is specifically configured to determine any one of the following:

using the first set of RACH resource configurations as the target RACH resource configuration when the third indication field indicates the RACH resource configuration of the cell where the UE is located and the first set of RACH resource configurations, and a RACH resource configuration indicated by the fourth indication field belongs to the first set of RACH resource configurations;
using, as the target RACH resource configuration, the RACH resource configuration of the cell where the UE is located when the third indication field indicates the RACH resource configuration of the cell where the UE is located and the first set of RACH resource configurations, and the RACH resource configuration indicated by the fourth indication field does not belong to the first set of RACH resource configurations;
using the second set of RACH resource configurations as the target RACH resource configuration when the third indication field indicates the RACH resource configuration of the cell where the UE is located and the second set of RACH resource configurations, and the RACH resource configuration indicated by the fourth indication field belongs to the second set of RACH resource configurations; or
using, as the target RACH resource configuration, the RACH resource configuration of the cell where the UE is located when the third indication field indicates the RACH resource configuration of the cell where the UE is located and the second set of RACH resource configurations, and the RACH resource configuration indicated by the fourth indication field does not belong to the second set of RACH resource configurations.

In a possible implementation, the first information includes a signaling format of the PDCCH signaling. The determining module 82 is specifically configured to use, as the target RACH resource configuration, the RACH resource configuration among the at least two RACH resource configurations that corresponds to the signaling format of the PDCCH signaling.

In a possible implementation, the first information includes the PDCCH resource for transmitting the PDCCH signaling. The PDCCH resource includes at least one resource. Each resource corresponds to at least one RACH resource configuration among the at least two RACH resource configurations. The receiving module 81 is specifically configured to receive the PDCCH signaling on a first resource. The first resource is one of the at least one resource, and the target RACH resource configuration is the RACH resource configuration corresponding to the first resource.

In a possible implementation, the PDCCH signaling includes a fifth indication field. The receiving module 81 is specifically configured to: determine, based on first information, a first RACH resource configuration from at least two RACH resource configurations, where the first RACH resource configuration is a first set of RACH resource configurations or a second set of RACH resource configurations; and determine, based on the fifth indication field, a target RACH resource configuration from the first RACH resource configuration, where the first set of RACH resource configurations includes a RACH resource configuration of a neighboring cell of a cell where the UE is located, and the second set of RACH resource configurations includes a RACH resource configuration of a candidate cell.

The resource configuration determining apparatus in this embodiment of this application may be an electronic device, for example, an electronic device having an operating system, or may be a component in the electronic device, for example, an integrated circuit or a chip. The electronic device may be a UE, or may be another device other than the UE. For example, the UE may include but is not limited to the foregoing listed type of the UE 11, and the another device may be a server or a network attached storage (Network Attached Storage, NAS). This is not specifically limited in embodiments of this application.

The resource configuration determining apparatus provided in embodiments of this application can implement the processes implemented in the foregoing method embodiments, and achieve a same technical effect. To avoid repetition, details are not described herein again.

As shown in FIG. 7, an embodiment of this application further provides a UE 90, including a processor 91, a memory 92, and a program or instructions stored in the memory 92 and executable on the processor 91. When the program or the instructions are executed by the processor 91, the processes of the foregoing method embodiments are implemented, and can achieve the same technical effect. To avoid repetition, details are not described herein again.

It should be noted that the UE in embodiments of this application includes the foregoing mobile electronic device and a non-mobile electronic device.

An embodiment of this application further provides a UE, including a processor and a communication interface. The communication interface is coupled to the processor. The processor is configured to run a program or instructions, to implement the steps in the foregoing method embodiment. The UE embodiment corresponds to the foregoing method embodiment of the UE side. The implementation processes and implementations of the foregoing method embodiments are all applicable to the UE embodiment, and can achieve the same technical effect. Specifically, FIG. 8 is a schematic diagram of a hardware structure of a UE 1000 for implementing an embodiment of this application.

The UE 1000 includes but is not limited to at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the UE 1000 may further include a power supply (such as a battery) that supplies power to various components. The power supply may be logically connected to the processor 1010 through a power management system, thereby realizing functions such as charging, discharging, and power consumption management through the power management system. The UE structure shown in FIG. 8 constitutes no limitation on the UE, and the UE may include more or fewer components than those shown in the figure, or some merged components, or different component arrangements. Details are not described herein again.

It should be noted that, in this embodiment of this application, the input unit 1004 may include a graphics processing unit (Graphics Processing Unit, GPU) 1041 and a microphone 1042. The graphics processing unit 1041 processes image data of a static picture or a video obtained by an image capture apparatus (for example, a camera) in a video capture mode or an image capture mode. The display unit 1006 may include a display panel 1061. The display panel 1061 may be configured in a form such as a liquid crystal display or an organic light-emitting diode. The user input unit 1007 includes at least one of a touch panel 1071 and another input device 1072. The touch panel 1071 is also referred to as a touch screen. The touch panel 1071 may include two parts: a touch detection apparatus and a touch controller. The another input device 1072 may include but is not limited to a physical keyboard, a function button (such as a volume control button or a power button), a trackball, a mouse, and a joystick. Details are not described herein again.

In this embodiment of this application, the radio frequency unit 1001 receives downlink data from a network side device and may transmit the downlink data to the processor 1010 for processing. In addition, the radio frequency unit 1001 may send uplink data to the network side device. Generally, the radio frequency unit 1001 includes but is not limited to an antenna, an amplifier, a transceiver, a coupler, a low noise amplifier, a duplexer, and the like.

The memory 1009 may be configured to store a software program or instructions and various data. The memory 1009 may mainly include a first storage area for storing a program or instructions and a second storage area for storing data. The first storage area may store an operating system, an application or instructions required for at least one function (such as a sound playback function and an image playback function), and the like. In addition, the memory 1009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in embodiments of this application includes but is not limited to these and any other suitable types of memories.

The processor 1010 may include one or more processing units. Optionally, the processor 1010 integrates an application processor and a modem processor. The application processor mainly processes operations related to an operating system, a user interface, an application program, and the like. The modem processor mainly processes wireless communication signals, and is, for example, a baseband processor. It may be understood that the foregoing modem processor may alternatively not be integrated into the processor 1010.

The radio frequency unit 1001 is configured to receive physical downlink control channel PDCCH signaling. The PDCCH signaling is used to trigger a random access procedure.

The processor 1010 is configured to determine a target random access channel RACH resource configuration based on first information. The first information is associated with the PDCCH signaling. The target RACH resource configuration is at least one of at least two RACH resource configurations configured for the UE.

An embodiment of this application provides a UE. After receiving the PDCCH signaling, the UE may determine, based on the first information associated with the PDCCH signaling, the target RACH resource configuration corresponding to the random access procedure from the at least two RACH resource configurations configured for the UE. Therefore, the UE may map, to the target RACH resource configuration, the resource-related configuration information of the PRACH transmission indicated by the PDCCH signaling.

In some embodiments of this application, the at least two RACH resource configurations include any one of the following:

a RACH resource configuration of a cell where the UE is located and a first set of RACH resource configurations;

the RACH resource configuration of the cell where the UE is located and a second set of RACH resource configurations; or

the RACH resource configuration of the cell where the UE is located, the first set of RACH resource configurations, and the second set of RACH resource configurations, where the first set of RACH resource configurations includes a RACH resource configuration of a neighboring cell of the cell where the UE is located, and the second set of RACH resource configurations includes a RACH resource configuration of a candidate cell.

In some embodiments of this application, the first information includes any one of an indication field included in the PDCCH signaling, a signaling format of the PDCCH signaling, or a PDCCH resource for transmitting the PDCCH signaling, where the indication field is used by the UE to determine at least one RACH resource configuration from the at least two RACH resource configurations.

In some embodiments of this application, the first information includes an indication field. The processor 1010 is specifically configured to use, as the target RACH resource configuration, the RACH resource configuration indicated by the indication field.

In some embodiments of this application, the first information includes the indication field. The indication field includes a first indication field and a second indication field. The processor 1010 is specifically configured to:

use, as the target RACH resource configuration, the RACH resource configuration of the cell where the UE is located when values of the first indication field and the second indication field are both preset values; and

use, as the target RACH resource configuration, a RACH resource configuration indicated by a target indication field when the values of the first indication field and the second indication field are different, where a value of the target indication field is not a preset value.

In some embodiments of this application, the first information includes the indication field. The indication field includes a third indication field and a fourth indication field. The third indication field indicates any one of the following: the RACH resource configuration of the cell where the UE is located and the first set of RACH resource configurations, or the RACH resource configuration of the cell where the UE is located and the second set of RACH resource configurations. The first set of RACH resource configurations includes a RACH resource configuration of a neighboring cell of the cell where the UE is located. The second set of RACH resource configurations includes a RACH resource configuration of a candidate cell.

The processor 1010 is specifically configured to determine any one of the following:

using the first set of RACH resource configurations as the target RACH resource configuration when the third indication field indicates the RACH resource configuration of the cell where the UE is located and the first set of RACH resource configurations, and a RACH resource configuration indicated by the fourth indication field belongs to the first set of RACH resource configurations;

using, as the target RACH resource configuration, the RACH resource configuration of the cell where the UE is located when the third indication field indicates the RACH resource configuration of the cell where the UE is located and the first set of RACH resource configurations, and the RACH resource configuration indicated by the fourth indication field does not belong to the first set of RACH resource configurations;

using the second set of RACH resource configurations as the target RACH resource configuration when the third indication field indicates the RACH resource configuration of the cell where the UE is located and the second set of RACH resource configurations, and the RACH resource configuration indicated by the fourth indication field belongs to the second set of RACH resource configurations; or

using, as the target RACH resource configuration, the RACH resource configuration of the cell where the UE is located when the third indication field indicates the RACH resource configuration of the cell where the UE is located and the second set of RACH resource configurations, and the RACH resource configuration indicated by the fourth indication field does not belong to the second set of RACH resource configurations.

In some embodiments of this application, the first information includes a signaling format of the PDCCH signaling. The processor 1010 is specifically configured to use, as the target RACH resource configuration, the RACH resource configuration among the at least two RACH resource configurations that corresponds to the signaling format of the PDCCH signaling.

In some embodiments of this application, the first information includes the PDCCH resource for transmitting the PDCCH signaling. The PDCCH resource includes at least one resource. Each resource corresponds to at least one RACH resource configuration among the at least two RACH resource configurations.

The radio frequency unit 1001 is specifically configured to receive the PDCCH signaling on a first resource. The first resource is one of the at least one resource, and the target RACH resource configuration is the RACH resource configuration corresponding to the first resource.

In some embodiments of this application, the PDCCH signaling includes a fifth indication field. The receiving module 81 is specifically configured to: determine, based on first information, a first RACH resource configuration from at least two RACH resource configurations, where the first RACH resource configuration is a first set of RACH resource configurations or a second set of RACH resource configurations; and determine, based on the fifth indication field, a target RACH resource configuration from the first RACH resource configuration, where the first set of RACH resource configurations includes a RACH resource configuration of a neighboring cell of a cell where the UE is located, and the second set of RACH resource configurations includes a RACH resource configuration of a candidate cell.

It may be understood that for the implementation processes of all implementations mentioned in embodiments, reference may be made to the relevant description in the foregoing method embodiments, and the same or corresponding technical effects can be achieved. To avoid repetition, details are not described herein again.

An embodiment of this application further provides a readable storage medium. The readable storage medium stores a program or instructions. When the program or the instructions are executed by a processor, the processes of the foregoing method embodiments are implemented, and can achieve the same technical effect. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor. The processor is configured to run a program or instructions, to implement the processes of the foregoing method embodiments, and can achieve the same technical effect. To avoid repetition, details are not described herein again.

It should be understood that the chip mentioned in this embodiment of this application may further be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the foregoing method embodiments, and can achieve the same technical effect. To avoid repetition, details are not described herein again.

It should be noted that in this specification, terms "include", "comprise", or any other variants thereof are intended to encompass non-exclusive inclusion, so that a process, a method, an article, or an apparatus including a series of elements not only includes those elements, but also includes another element not listed explicitly, or includes elements inherent to the process, the method, the article, or the apparatus. Without any further limitation, an element defined by the phrase "including one ..." does not exclude existence of additional same elements in the process, the method, the article, or the apparatus that includes the element. In addition, it should be noted that the scope of the method and the apparatus in implementations of this application is not limited to function execution in the order shown or discussed, and may further include function execution in a substantially simultaneous manner or in the opposite order based on the functions involved. For example, the described method may be performed in an order different from the described order, and various steps may further be added, omitted, or combined. Moreover, features described with reference to some examples may be combined in another example.

Through the descriptions of the foregoing implementations, a person skilled in the art may clearly learn that the method in the foregoing embodiments may be implemented by a computer software product with a necessary universal hardware platform, or may be implemented by hardware. The computer software product is stored in a storage medium (such as a ROM, a RAM, a magnetic disk, or an optical disc) and includes several instructions, to enable the terminal or the network side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection scope of this application.

**Claims**

1. A resource configuration determining method, comprising:

   receiving, by a user equipment UE, physical downlink control channel PDCCH signaling, wherein the PDCCH signaling is used to trigger a random access procedure;

determining, by the UE based on first information, a target random access channel RACH resource configuration corresponding to the random access procedure, wherein the first information is associated with the PDCCH signaling, and the target RACH resource configuration is at least one of at least two RACH resource configurations configured for the UE.

2.  The method according to claim 1, wherein the at least two RACH resource configurations comprise any one of the following:

    a RACH resource configuration of a cell where the UE is located, a first set of RACH resource configurations, and a second set of RACH resource configurations;

    the RACH resource configuration of the cell where the UE is located and the first set of RACH resource configurations; or

    the RACH resource configuration of the cell where the UE is located and the second set of RACH resource configurations, wherein

    the first set of RACH resource configurations comprises a RACH resource configuration of a neighboring cell of the cell where the UE is located; and

    the second set of RACH resource configurations comprises a RACH resource configuration of a candidate cell.

3.  The method according to claim 2, wherein the first information comprises any one of an indication field comprised in the PDCCH signaling, a signaling format of the PDCCH signaling, or a PDCCH resource for transmitting the PDCCH signaling; and

    the indication field is used by the UE to determine at least one RACH resource configuration from the at least two RACH resource configurations.

4.  The method according to claim 3, wherein when it is determined that the target RACH resource configuration is the first set of RACH resource configurations, a PRACH transmission indicator comprised in the PDCCH signaling is not interpreted.

5.  The method according to claim 3, wherein the PDCCH signaling is a format 1_0 of DCI sent on a PDCCH.

6.  The method according to any one of claims 1 to 5, further comprising:

    receiving first signaling, wherein the first signaling is configured for enabling of a first transmission mode, the enabling of the first transmission mode indicates that higher-layer signaling is configured with a synchronization signal block SSB associated with an additional physical cell identifier PCI, and a serving cell is associated with two timing advance groups TAGs.

7.  The method according to claim 3, wherein the first information comprises the indication field; and

    the determining, by the UE based on first information, a target RACH resource configuration corresponding to the random access procedure comprises:

    using, as the target RACH resource configuration by the UE, the RACH resource configuration indicated by the indication field.

8.  The method according to claim 3, wherein the first information comprises the indication field, and the indication field comprises a first indication field and a second indication field; and

    the determining, by the UE based on first information, a target RACH resource configuration corresponding to the random access procedure comprises:

    using, as the target RACH resource configuration by the UE, the RACH resource configuration of the cell where the UE is located when values of the first indication field and the second indication field are both preset values; and

    using, as the target RACH resource configuration by the UE, a RACH resource configuration indicated by a target indication field when the values of the first indication field and the second indication field are different, wherein a value of the target indication field is not a preset value.

9.  The method according to claim 3, wherein the first information comprises the indication field;

    the indication field comprises a third indication field and a fourth indication field;

    the third indication field indicates at least one of the following:

    the RACH resource configuration of the cell where the UE is located and the first set of RACH resource configurations; and

    the RACH resource configuration of the cell where the UE is located and the second set of RACH resource configurations, wherein the first set of RACH resource configurations comprises the RACH resource configuration of the neighboring cell of the cell where the UE is located; and

    the second set of RACH resource configurations comprises the RACH resource configuration of the candidate cell; and

    the determining, by the UE based on first information, a target RACH resource configuration corresponding to the random access procedure comprises any one of the following:

using, by the UE, the first set of RACH resource configurations as the target RACH resource configuration when the third indication field indicates the RACH resource configuration of the cell where the UE is located and the first set of RACH resource configurations, and a RACH resource configuration indicated by the fourth indication field belongs to the first set of RACH resource configurations;

using, as the target RACH resource configuration by the UE, the RACH resource configuration of the cell where the UE is located when the third indication field indicates the RACH resource configuration of the cell where the UE is located and the first set of RACH resource configurations, and the RACH resource configuration indicated by the fourth indication field does not belong to the first set of RACH resource configurations;

using, by the UE, the second set of RACH resource configurations as the target RACH resource configuration when the third indication field indicates the RACH resource configuration of the cell where the UE is located and the second set of RACH resource configurations, and the RACH resource configuration indicated by the fourth indication field belongs to the second set of RACH resource configurations; or

using, as the target RACH resource configuration by the UE, the RACH resource configuration of the cell where the UE is located when the third indication field indicates the RACH resource configuration of the cell where the UE is located and the second set of RACH resource configurations, and the RACH resource configuration indicated by the fourth indication field does not belong to the second set of RACH resource configurations.

10. The method according to claim 3, wherein the first information comprises the signaling format of the PDCCH signaling; and the determining, by the UE based on first information, a target RACH resource configuration corresponding to the random access procedure comprises:
using, as the target RACH resource configuration by the UE, the RACH resource configuration among the at least two RACH resource configurations that corresponds to the signaling format of the PDCCH signaling.

11. The method according to claim 3, wherein the first information comprises a PDCCH resource for transmitting the PDCCH signaling, the PDCCH resource comprises at least one resource, and each resource corresponds to at least one RACH resource configuration among the at least two RACH resource configurations; and the receiving, by a UE, PDCCH signaling comprises:

receiving, by the UE, the PDCCH signaling on a first resource, wherein the first resource is one of the at least one resource, and the target RACH resource configuration is a RACH resource configuration corresponding to the first resource.

12. The method according to claim 3, wherein the PDCCH signaling comprises a fifth indication field; and the determining, by the UE based on first information, a target RACH resource configuration corresponding to the random access procedure comprises:

determining, by the UE, a first RACH resource configuration from the at least two RACH resource configurations based on the first information, wherein the first RACH resource configuration is the first set of RACH resource configurations or the second set of RACH resource configurations; and determining, by the UE, the target RACH resource configuration from the first RACH resource configuration based on the fifth indication field, wherein the first set of RACH resource configurations comprises the RACH resource configuration of the neighboring cell of the cell where the UE is located; and the second set of RACH resource configurations comprises the RACH resource configuration of the candidate cell.

13. A resource configuration determining apparatus, comprising a receiving module and a determining module, wherein

the receiving module is configured to receive physical downlink control channel PDCCH signaling, wherein the PDCCH signaling is used to trigger a random access procedure; and

the determining module is configured to determine, based on first information, a target random access channel RACH resource configuration corresponding to the random access procedure, wherein the first information is associated with the PDCCH signaling, and the target RACH resource configuration is at least one of at least two RACH resource configurations configured for the UE.

14. The apparatus according to claim 13, wherein the at least two RACH resource configurations comprise any one of the following:

a RACH resource configuration of a cell where the UE is located, a first set of RACH resource configurations, and a second set of RACH resource configurations;
the RACH resource configuration of the cell where the UE is located and the first set of RACH resource configurations; or
the RACH resource configuration of the cell where the UE is located and the second set of RACH resource configurations, wherein
the first set of RACH resource configurations comprises a RACH resource configuration of a neighboring cell of the cell where the UE is located; and
the second set of RACH resource configurations comprises a RACH resource configuration of a candidate cell.

15. The apparatus according to claim 14, wherein the first information comprises any one of an indication field comprised in the PDCCH signaling, a signaling format of the PDCCH signaling, or a PDCCH resource for transmitting the PDCCH signaling; and the indication field is used by the UE to determine at least one RACH resource configuration from the at least two RACH resource configurations.

16. The apparatus according to claim 15, wherein when it is determined that the target RACH resource configuration is the first set of RACH resource configurations, a PRACH transmission indicator comprised in the PDCCH signaling is not interpreted.

17. The apparatus according to claim 15, wherein the PDCCH signaling is a format 1_0 of DCI sent on a PDCCH.

18. The apparatus according to any one of claims 13 to 17, wherein
the receiving module is further configured to receive first signaling, wherein the first signaling is configured for enabling of a first transmission mode, the enabling of the first transmission mode indicates that higher-layer signaling is configured with a synchronization signal block SSB associated with an additional physical cell identifier PCI, and a serving cell is associated with two timing advance groups TAGs.

19. The apparatus according to claim 15, wherein the first information comprises the indication field; and the determining module is specifically configured to use, as the target RACH resource configuration, the RACH resource configuration indicated by the indication field.

20. The apparatus according to claim 15, wherein the first information comprises the indication field, and the indication field comprises a first indication field and a second indication field; and the determining module is specifically configured to:

use, as the target RACH resource configuration, the RACH resource configuration of the cell where the UE is located when values of the first indication field and the second indication field are both preset values; and
use, as the target RACH resource configuration, a RACH resource configuration indicated by a target indication field when the values of the first indication field and the second indication field are different, wherein a value of the target indication field is not a preset value.

21. The apparatus according to claim 15, wherein the first information comprises the indication field; and

the indication field comprises a third indication field and a fourth indication field;
the third indication field indicates at least one of the following:

the RACH resource configuration of the cell where the UE is located and the first set of RACH resource configurations; and
the RACH resource configuration of the cell where the UE is located and the second set of RACH resource configurations, wherein the first set of RACH resource configurations comprises the RACH resource configuration of the neighboring cell of the cell where the UE is located; and
the second set of RACH resource configurations comprises the RACH resource configuration of the candidate cell; and
the determining module is specifically configured to determine any one of the following:

using the first set of RACH resource configurations as the target RACH resource configuration when the third indication field indicates the RACH resource configuration of the cell where the UE is located and the first set of RACH resource configurations, and a RACH resource configuration indicated by the fourth indication field belongs to the first set of RACH resource configurations;

using, as the target RACH resource configuration, the RACH resource configuration of the cell where the UE is located when the third indication field indicates the RACH resource configuration of the cell where the UE is located and the first set of RACH resource configurations, and the RACH resource configuration indicated by the fourth indication field does not belong to the first set of RACH resource configurations;

using the second set of RACH resource configurations as the target RACH resource configuration when the third indication field indicates the RACH resource configuration of the cell where the UE is located and the second set of RACH resource configurations, and the RACH resource configuration indicated by the fourth indication field belongs to the second set of RACH resource configurations; or

using, as the target RACH resource configuration, the RACH resource configuration of the cell where the UE is located when the third indication field indicates the RACH resource configuration of the cell where the UE is located and the second set of RACH resource configurations, and the RACH resource configuration indicated by the fourth indication field does not belong to the second set of RACH resource configurations.

22. The apparatus according to claim 15, wherein the first information comprises the signaling format of the PDCCH signaling; and

the determining module is specifically configured to use, as the target RACH resource configuration, the RACH resource configuration among the at least two RACH resource configurations that corresponds to the signaling format of the PDCCH signaling.

23. The apparatus according to claim 15, wherein the first information comprises a PDCCH resource for transmitting the PDCCH signaling, the PDCCH resource comprises at least one resource, and each resource corresponds to at least one RACH resource configuration among the at least two RACH resource configurations; and

the receiving module is specifically configured to receive the PDCCH signaling on a first resource, wherein

the first resource is one of the at least one resource, and the target RACH resource configuration is a RACH resource configuration corresponding to the first resource.

24. The apparatus according to claim 15, wherein the PDCCH signaling comprises a fifth indication field; and

the determining module is specifically configured to: determine, based on the first information, a first RACH resource configuration from the at least two RACH resource configurations, wherein the first RACH resource configuration is the first set of RACH resource configurations or the second set of RACH resource configurations; and determine, based on the fifth indication field, the target RACH resource configuration from the first RACH resource configuration, wherein

the first set of RACH resource configurations comprises the RACH resource configuration of the neighboring cell of the cell where the UE is located; and

the second set of RACH resource configurations comprises the RACH resource configuration of the candidate cell.

25. A user equipment UE, comprising a processor and a memory, wherein the memory stores a program or instructions executable on the processor, and when the program or the instructions are executed by the processor, the steps of the resource configuration determining method according to any one of claims 1 to 12 are implemented.

26. A readable storage medium, wherein the readable storage medium stores a program or instructions, and when the program or the instructions are executed by a processor, the steps of the resource configuration determining method according to any one of claims 1 to 12 are implemented.

Network side device

12

11 Terminal

11 Terminal

Terminal

FIG. 1

| A UE receives PDCCH signaling | 201 |

↓

| The UE determines, based on first information, a target RACH resource configuration corresponding to a random access procedure | 202 |

FIG. 2

| A UE receives PDCCH signaling on a first resource | 201a |

↓

| The UE determines, based on first information, a target RACH resource configuration corresponding to a random access procedure | 202 |

FIG. 3

| A UE receives PDCCH signaling | 201 |

↓

| The UE uses, as a target RACH resource configuration, a RACH resource configuration indicated by an indication field | 202a |

FIG. 4

| A UE receives PDCCH signaling | 201 |

↓

| The UE uses, as a target RACH resource configuration, a RACH resource configuration among at least two RACH resource configurations that corresponds to a signaling format of the PDCCH signaling | 202h |

FIG. 5

80

Resource configuration
determining apparatus

81

Receiving module

82

Determining module

FIG. 6

90

UE

92

Memory

91

Processor

FIG. 7

1000

1001 — Radio frequency
unit

1002 — Network module

1010

Memory

1009 — Application
program

Operating system

1003 — Audio output unit

1004 — Input unit

Graphics
processing unit — 1041

Microphone — 1042

1008 — Interface unit

Processor

1007 — User input unit

1071 — Touch panel

1072 — Another input
device

1006 — Display unit

Display panel — 1061

Sensor — 1005

FIG. 8

## INTERNATIONAL SEARCH REPORT

| International application No. |
| --- |
| **PCT/CN2024/111698** |

| A. | CLASSIFICATION OF SUBJECT MATTER |
| --- | --- |

H04W 74/00(2009.01)i

According to International Patent Classification (IPC) or to both national classification and IPC

| B. | FIELDS SEARCHED |
| --- | --- |

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

CNTXT, ENTXT, DWPI, WPABS, CNKI, 3GPP: R18, 低时延, 切换, 随机接入, 随机接入信道, 多, 候选小区, 邻小区, PDCCH, LTM, RACH, swith, candidate cell, neighbor cell

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | Huawei, HiSilicon. "R2-2301150, "RACH-less cell switch in LTM""<br>*3GPP tsg_ran\wg2_rl2*, No. tsgr2_121, 17 February 2023 (2023-02-17),<br>     section 2 | 1-26 |
| Y | VIVO. ""R2-2302804_Discussion on LTM procedures""<br>*3GPP tsg_ran\wg2_rl2*, 07 April 2023 (2023-04-07),<br>     section 2 | 1-26 |
| A | CN 116472755 A (BEIJING XIAOMI MOBILE SOFTWARE CO., LTD.) 21 July 2023<br>(2023-07-21)<br>     entire document | 1-26 |
| A | OPPO. "R2-2211861, "Discussion on general procedure for LTM""<br>*3GPP tsg_ran\wg2_rl2*, No. tsgr2_120, 04 November 2022 (2022-11-04),<br>     entire document | 1-26 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 October 2024** | **17 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/111698**

| Patent document cited in search report | | | Publication date (day/month/year) | Patent family member(s) | Publication date (day/month/year) |
|---|---|---|---|---|---|
| CN | 116472755 | A | 21 July 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311045390X